# EUROPEAN PATENT SPECIFICATION

(11) **EP 2 104 043 B1**
(45) Date of publication and mention of the grant of the patent: **27.04.2011**
(21) Application number: 08152911.7
(22) Date of filing: 18.03.2008
(51) Int. Cl.: G06F 17/27

(54) **Handheld electronic device and associated method for improving typing efficiency on the device**
Tragbare elektronische Vorrichtung und entsprechendes Verfahren zur Erhöhung der Tippeffizienz auf der Vorrichtung
Dispositif électronique portable et procédé associé pour améliorer l'efficacité de frappe sur le dispositif

(43) Date of publication of application: 23.09.2009
(60) Divisional application: 10177139.2
(73) Proprietor: RESEARCH IN MOTION LIMITED, Waterloo, Ontario N2L 3W8 (CA)
(72) Inventor: Gao, Dapeng, Ontario, N2L 3W8 (CA)
(74) Representative: Phillips, Emily Elizabeth

(56) References cited:
- EP-A- 1 569 131
- US-A1- 2005 060 448
- US-A1- 2007 075 974
- NOKIA: "BEDIENUNGSANLEITUNG NOKIA 7110" BEDIENUNGSANLEITUNG NOKIA 7110, 1 January 2000 (2000-01-01), pages 1-60, XP002256174

## Description

### BACKGROUND

### Field

The disclosed and claimed concept relates generally to handheld electronic devices, and, more particularly, to a method that is executable on a handheld electronic device for improving the typing efficiency through the use of user defined macros to dynamically change the current edit field.

### Description of the Related Art

Numerous types of handheld electronic devices are known. Examples of such handheld electronic devices include, for instance, personal data assistants (PDAs), handheld computers, two-way pagers, cellular telephones, and the like. Many handheld electronic devices also feature wireless communication capability, although many such handheld electronic devices are stand-alone devices that are functional without communication with other devices.

Many handheld electronic devices include and provide access to a wide range of integrated applications, including, without limitation, email, telephone, short message service (SMS), multimedia messaging service (MMS), browser, calendar, memo pad and address book applications, such that a user can easily manage information and communications from a single, integrated device. These applications are typically selectively accessible and executable through a user interface that allows a user to easily navigate among these applications.

As is known, when using many of these applications, a user often inputs text using a keyboard provided as part of the handheld electronic device. During the input of text in this manner, many handheld electronic devices employ the following two primary types of input fields for entering and editing text (referred to herein as "edit fields"): normal edit fields and specialized edit fields. When a normal edit field is employed, the text that is input and that appears on the display of the handheld electronic device matches exactly what the user has typed (i.e., one of the characters appearing on each of the keys of the keyboard that is pressed), because the handheld electronic device does not employ any specialized processing to the characters that are input. For example, normal edit fields are used in an email application in the body of an email message and in the memo pad application when a user creates a memo.

On the other hand, specialized edit fields are "smarter" than normal edit fields in the sense that specialized edit fields understand the specific formats of certain inputs and therefore make it easier and faster to input certain text by applying specialized processing to the characters input by the user. In particular, in specialized edit fields, characters that would normally require more time consuming typing on the part of the user to input may instead be input more simply and quickly using a predetermined key selection. For example, when filling out the email address field of a new contact's information in the address book application using a common QWERTY keyboard configuration, instead of typing ALT+P to input the "@" character and ALT+M to get the "." character, if a specialized edit field is being employed a user can simply press a predetermined key, such as the SPACE key, at the appropriate time to get the appropriate character ("@" or "."). For instance, a user could simply type "name" SPACE "domain" SPACE "com" to input "name@domain.com" instead of having to type "name" ALT+P "domain" ALT+M "com" as would be required in a normal edit field. As another example, when entering a new contact's phone number in the address book application, if a specialized edit field is being employed, the characters "wersdfzxc" may be automatically translated to the characters "123456789", which saves the user time since the user would not have to press the ALT key along with the appropriate key each time to get the desired number. In still another example, when entering a URL in the browser application, if a specialized edit field is being employed, "http://www." may be automatically inserted in front of any text that is typed and pressing the SPACE key causes a "." character to be entered (rather than having to press ALT+M), which operations save time. It is understood that the expression "characters" as used herein shall broadly be construed to include letters, digits, symbols and the like and can additionally include ideographic characters, components thereof, other linguistic elements, and the like.

Specialized edit fields as just described are advantageous because they save time, require less key actuation, and typically make typing on handheld electronic devices, which are often small in size, easier. For instance, as demonstrated above, without a specialized edit field, a user will often need to press and hold a particular key, such as the ALT key, with one finger (typically a thumb), while typing with another finger (typically the other thumb). As will be appreciated, having only one finger (e.g., one thumb) available to type with dramatically reduces typing efficiency. Specialized edit fields, on the other hand, leave two fingers (typically both of the user's thumbs) free to type.

As mentioned above, the advantages presented by specialized edit fields are not available in situations where normal edit fields are employed, such as when a user is typing the body of an email or typing a note using the memo pad application. More specially, even though a user can easily type an email address in an address book application employing a specialized edit field by typing "name" SPACE "domain" SPACE "com", in the body of an email or in a memo pad note, the user has to type "name" ALT+P "subdomain" ALT+M "com" to get the same textual input. The latter input method is slower because pressing, for example, the SPACE key with one thumb is quicker than pressing ALT+P or ALT+M with two thumbs. In addition, because seasoned handheld electronic device users are so used to the service provided when typing with specialized edit fields, typing email addresses, phone numbers and URLs and the like in situations where a normal edit field is employed is likely to lead to errors (i.e., a user may forget that the specialized edit field functionality is not available and therefore press incorrect keys).

It would thus be beneficial to be able to take advantage of specialized edit field functionality in situations where normal edit fields are employed.
US-A-2005060448 discloses entering languages based in whole or in part on ideographic characters such as Chinese, Japanese and Korean in a computerized text-entry system in a two-phase process. Nokia: Bedienungsanleitung Nukia 7110 discloses operating instructions for a Nokia 7110 mobile telephone in which the input mode can be changed from letter input mode to number input mode using a given key press before and after an input sequence which should be interpreted according to the second input mode. US-A-2007075974 discloses a handheld electronic device optimized for use of the device with the thumbs in which macros are used to replace original strings e.g. % d for today's date and normal and specialised input fields are used. In fields designed for certain types of input, the user interface engine will automatically substitute appropriate characters if inappropriate characters are entered. For example, in a field designed to hold an email address, a method of composing an email address is provided by the character substitution feature using the form <characters>@<characters>.<characters>. In the instance, it is assumed blank spaces are unacceptable characters for an email address field. The method begins with the user interface engine receiving from user input a character set representing a certain portion of the email address if a first delimiter trigger signal, preferably a first blank space, is received froze the user input, the engine confirms that no at-sign character ("@") has been entered in the already received character set. If no, the engine substitutes the first delimiter trigger signal with a first email delimiter, preferably the at-sign character. If yes, the engine substitutes the first delimiter with a second email delimiter, preferably a period character. For any subsequent blank space input received, the engine substitutes preferably another period character. EP-A-1569131 discloses a communication device for composing a text-based communication which queries a translation service with a portion of text to obtain a replacement portion in a different language.
The invention is set out in the claims.

### BRIEF DESCRIPTION OF THE DRAWINGS

A full understanding of the disclosed and claimed concept can be gained from the following Description when read in conjunction with the accompanying drawings in which:

Figure 1 is a front view of an improved handheld electronic device in accordance with the disclosed and claimed concept;

Figure 2 is a block diagram of the handheld electronic device of Figure 1;

Figure 3 is a flowchart illustrating a method of creating a macro on the handheld electronic device of Figures 1 and 2 according to one arrangement of the disclosed and claimed concept;

Figure 4 is a flowchart illustrating a method according to another arrangement of the disclosed and claimed concept by which the handheld electronic device of Figures 1 and 2 enables a user to create a macro;

Figure 5 is a flowchart illustrating a method by which the handheld electronic device of Figures 1 and 2 enables the user to input text using a stored macro according to one arrangement of the disclosed and claimed concept; and

Figure 6 shows an email message screen that is provided according to another aspect of the disclosed and claimed concept.

### DESCRIPTION

The disclosed and claimed concept provides a method of facilitating the input of text on a handheld electronic device that employs normal edit fields and one or more specialized edit fields. The method includes storing a user defined macro that is associated with a first specified edit field and identified by a first macro identifier, wherein the first specified edit field has one or more rules associated therewith for translating textual input into alternative text. The method further includes receiving a first indication, such as the entry of a predetermined delimiter character, that a macro is to be employed, receiving the first macro identifier, and responsive to receiving the first macro identifier, switching a current edit field of the current application of the handheld electronic device to the first specified edit field. Thereafter the method includes receiving first textual input, translating the first textual input into first alternative text based on the one or more rules of the first specified edit field, receiving a second indication, such as the entry of the predetermined delimiter character, that input using the first macro is complete, and responsive to receiving the second indication, switching the current edit field of the current application from the first specified edit field to a normal edit field. Preferably, the method further includes displaying the first alternative text and using the first alternative text in the current application.

The disclosed and claimed concept also provides a method of creating a macro for use in facilitating the input of text on a handheld electronic device employing normal edit fields and one or more specialized edit fields. The method includes receiving an identification of a particular one of the one or more specialized edit fields to be used in the macro, wherein the identified specialized edit field has one or more rules associated therewith for translating textual input into alternative text, receiving a macro identifier for the macron and storing the identified specialized edit field in association with the macro identifier. Thereafter, the macro when, active causes a current edit field of a current application of the handheld electronic device to be switched to the associated specialized edit field and causes textual input received by the handheld electronic device to be translated into alternative text based on the one or more rules of the specialized edit field.

The disclosed and claimed concept further provides a handheld electronic device that implements the methods just described.

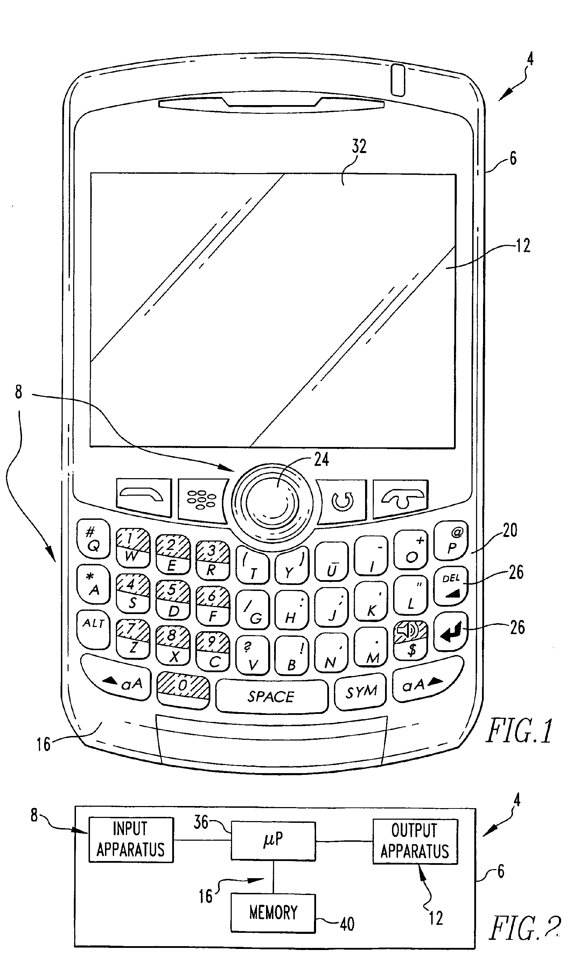

An improved handheld electronic device 4 in accordance with the disclosed and claimed concept is indicated generally in Figure 1 and is depicted schematically in Figure 2. The improved handheld electronic device 4 comprises a housing 6, and further comprises an input apparatus 8, an output apparatus 12, and a processor apparatus 16 disposed in the housing 6. The input apparatus 8 provides input to the processor apparatus 16. The processor apparatus 16 provides output signals to the output apparatus 12. As described elsewhere herein, the present example arrangement of the handheld electronic device 4 includes applications and/or routines resident thereon such as, for example, and without limitation, an e-mail and/or other messaging client (e.g., short message service (SMS), or multimedia messaging service (MMS)) a telephone application, a calendar application, a web browser application, a memo pad application, and an address book application, although other and/or additional applications and/or routines can be provided without departing from the disclosed and claimed concept.

The input apparatus 8 comprises a keyboard 20 and a trackball 24. The keyboard 20 in the exemplary arrangement depicted herein comprises a plurality of keys 26 that are each actuatable to provide input to the processor apparatus 16. The trackball 24 is rotatable to provide navigational and other input to the processor apparatus 16, and additionally is translatable in a direction inwardly toward the handheld electronic device 4 to provide other inputs, such as selection inputs. The trackball 24 is freely rotatable on the housing 6 and thus is able to provide navigational inputs in the vertical direction, i.e., the up-down direction, in the horizontal direction, i.e., the left-right (side to side) direction, as well as combinations thereof. In addition, the trackball 24 may be adapted to provide navigational inputs in diagonal directions. The keys 26 and the trackball 24 serve as input members which are actuatable to provide input to the processor apparatus 16. Alternative mechanisms for providing similar multi-directional navigation may be used in place of the trackball 24, such as, without limitation, a thumbwheel, a joystick, a touchpad, a touch-sensitive display, and hard buttons disposed on the housing 6 of the handheld electronic device 4. The exemplary output apparatus 12 comprises a display 32.

The characters of the exemplary keyboard 20 are in an arrangement of a QWERTY keyboard, although that should not be considered to be limiting. In the present example embodiment, the exemplary letters are Roman letters, and the exemplary Roman letters serve as linguistic elements for text input into the handheld electronic device 4. It is understood that while the linguistic elements of the instant example embodiment are depicted as being Roman letters, the linguistic elements could be other elements such as, for example and without limitation, ideograms, portions of ideograms such as strokes, and other elements that can be used in the generation of words in a language. It is noted that the expressions "text" and "word", and variations thereof, are to be broadly construed herein and are not intended to be limiting in any fashion with regard to a particular language, a particular portion of a language or a means of providing an expression in a language, or to a particular language type or format. Moreover, the expressions "text" or "word" are not limited to words in a vocabulary and also include names, nomenclatures, abbreviations, etc.

The processor apparatus 16 comprises a processor 36 and a memory 40. The processor 36 may be, for example and without limitation, a microprocessor (µP) that interfaces with the memory 40. The memory 40 can be any one or more of a variety of types of internal and/or external storage media such as, without limitation, RAM, ROM, EPROM(s), EEPROM(s), FLASH, and the like that provide a storage register, i.e., a machine readable medium, for data storage in a similar fashion to an internal memory storage of a computer, and can be volatile memory or nonvolatile memory. The memory 40 has stored therein a number of routines (which include the various applications described elsewhere herein) that are executable on the processor 36. As employed herein, the expression "a number of" and variations thereof shall refer broadly to any nonzero quantity, including a quantity of one. In addition, one or more of the routines implement the methods of the disclosed and claimed concept described elsewhere herein.

According to the disclosed and claimed concept, the handheld electronic device 4 enables a user to create system-level user defined macros to dynamically change the current input edit field, i.e., a normal edit field as described herein, to a particular specialized edit field, e.g., an edit field for entering an email address, a phone number, a URL or a date, among others, in order to improve typing efficiency when a user is typing in a situation that would otherwise employ a normal edit field. As used herein, the term "macro" shall mean a series of commands or instructions executable by the that are stored by the memory 40 and executable by the processor 36 and that are represented in an abbreviated format. In particular, a user is able to define macros such that when the user types a predetermined delimiter character using the appropriate key 26 of the keyboard 20, such as, without limitation, a "$" character, followed by a predefined macro identifier, such as a selected sequence of characters, the then current edit field type will be switched to the specialized edit field that is associated with the entered macro identifier until the delimiter character is again typed by the user. For example, and without limitation, a user may define macros that switch the then current edit field type to the following specialized edit fields: email address edit field (example macro identifier "ea"); phone number edit field (example macro identifier "pn"); date edit field (example macro identifier "date"); and URL edit field (example macro identifier "url"). The user may then more easily type email address, phone number, date and URL information by typing the following: $ea[email address]$; $pn[phone number]$; $date[date]$; and $url[url]$, wherein the bracketed information is typed according to the rules of the associated edit field (such rules indicating how certain inputs are to be interpreted, displayed and used in the current application). A "$" character may be a good choice for the delimiter because it has been found that with the keyboard 20 shown in Figure 1, the key 26 that includes the "$" character thereon is one of the more seldom used keys 26. As will be appreciated, other means for indicating that a macro is to be employed, such as pressing a predefined key or keys 26 in a particular manner (e.g., press and hold) may also be employed as an alternative to the entry of a certain delimiter character.

To illustrate the benefits of the disclosed and claimed concept, suppose a user wanted to type the following text when composing an email message or creating a memo pad note:
"Hello, my personal email address is example@subdomain1.example.com and my personal phone number is 1234567. My website is http://www.example.com."
In the prior art, because a normal edit field would be employed in such a situation, the user would, using a keyboard like keyboard 20, have to type the following:
   "Hello, my personal email address is example
      ALT+Psubdomain1ALT+MexampleALT+Mcom and my personal phone number is ALT+WALT+EALT+RALT+SALT+DALT+FALT+Z. My website is httpALT+HALT+GALT+GwwwALT+MexampleALT+Mcom."
In contrast, with the above described macros, the user will only need to type the following using the keyboard 20 (with the ability to use two thumbs the whole time):
"Hello, my personal email address is
$eaexampleSPACEsubdomain1SPACEexampleSPACEcom$ and my personal phone number is $pnwerdfz$. My website is $urlexampleSPACEcom."
Note that after the user types each initial delimiter (e.g., "$") and macro identifier (e.g., "ea", "pn", "date", and "url"), the delimiter and macro identifier are no longer displayed on the display 12 of the handheld electronic device 4 and the edit field is automatically switched to the identified specialized edit field. In addition, once a user types each ending delimiter, it disappears from the display 12 and the edit field type that is being employed is automatically switched back to a normal edit field.

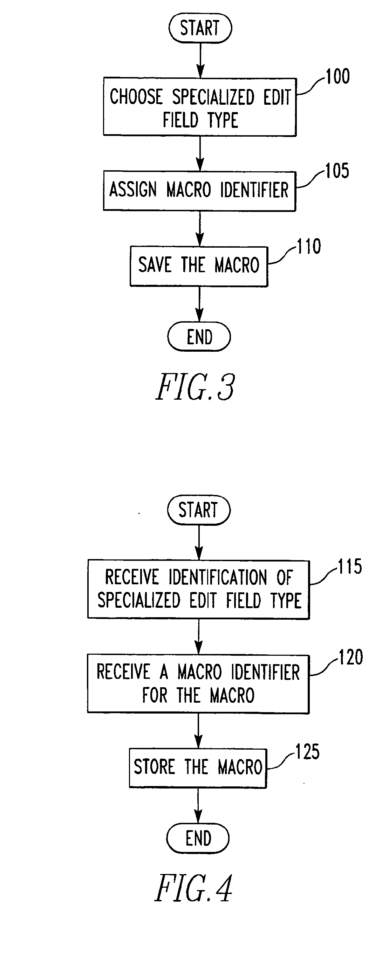

Figure 3 is a flowchart illustrating a method of creating a macro on the handheld electronic device 4 according to one arrangement of the disclosed and claimed concept. As will be appreciated, the method may be implement using the user interface of the handheld electronic device 4. In particular, a user may perform the method by being presented with certain information on the output apparatus 12, such as in the form of one or more menus and/or input screens provided on the display 32, and making certain selections and inputting certain information using the input apparatus 8. The method begins at step 100, wherein the user chooses the specialized edit field type (e.g., and without limitation, email address edit field, phone number edit field, date edit field, or URL edit field) for the macro being created. The user may do so by, for example, making a selection from a number of available edit field types listed in a selection menu provided on the display 12, or by inputting the information directly using the keyboard 20. Next, at step 105, once the specialized edit field type is chosen, the user assigns a macro identifier to the macro. As noted elsewhere herein, the macro identifier may be in the form of a string of one or more characters, preferably a string that will be easily remembered by the user. Then, at step 110, the user causes the macro to be saved in the memory 40, for example by choosing a "Save Macro" option form a menu provided on the display 32. Thereafter, the macro will be available for use by the user to input text as described elsewhere herein.

Figure 4 is a flowchart illustrating a method by which the handheld electronic device 4 enables the user to create a macro according to another arrangement of the disclosed and claimed concept which corresponds substantially to the user steps shown in Figure 3. The method begins at step 115, wherein the handheld electronic device 4, and in particular the processor apparatus 16 thereof, receives an identification of the particular specialized edit field type to be associated with the macro being generated. As discussed above, a user may provided this information by, for example, making a selection from a number of available edit field types listed in a selection menu provided by the handheld electronic device 4 on the display 12, or by inputting the information directly into the handheld electronic device 4 using the keyboard 20. Next, at step 120, the handheld electronic device 4, and in particular the processor apparatus 16 thereof, receives a macro identifier from the user for the macro being generated. Finally, in response to an input from the user, for example as described above, the handheld electronic device 4, at step 125, stores the specified macro in the memory 40 for later use by a user of the handheld electronic device 4.

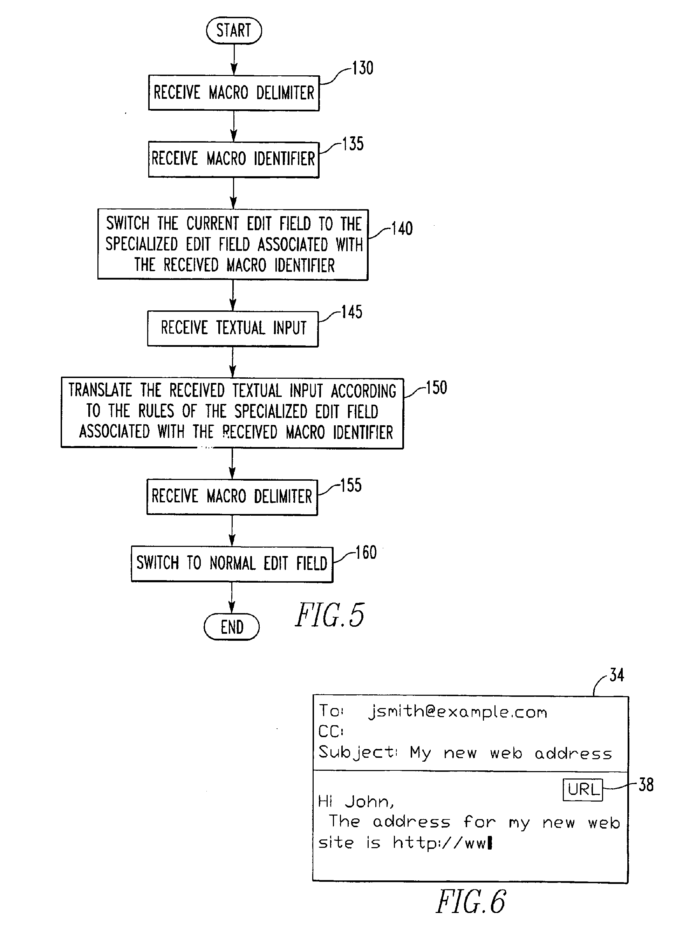

Figure 5 is a flowchart illustrating a method by which the handheld electronic device 4 enables the user to input text using a stored macro according to one arrangement of the disclosed and claimed concept in, for example, a situation where a normal edit field is being employed. The method begins at step 130, wherein the handheld electronic device 4, and in particular the processor apparatus 16 thereof, receives a predetermined macro delimiter (e.g., a "$") that is input by the user using the input apparatus 8. Next, at step 135, the handheld electronic device 4, and in particular the processor apparatus 16 thereof, receives a macro identifier (e.g., a "ea", "pn", "date", or "url") that is input by the user using the input apparatus 8 and that identifies a macro that has been stored in the memory 40 (step 110 of Figure 3 and step 125 of Figure 4). At step 140, in response to the input received at step 135, the processor apparatus 16 switches the current edit field (e.g., a normal edit field) to the specialized edit field that is identified by the received macro identifier. Then, at step 145, the handheld electronic device 4, and in particular the processor apparatus 16 thereof, receives textual input from the user as a result of the user's operation of the input apparatus 8. As used herein, the term "textual input" shall refer to any input in to the handheld electronic device 4 that results from the operation of the input apparatus 8, including, without limitation, the input of particular characters using the associated keys 26 and the input of spaces using the SPACE key 26. In step 150, the received textual input is translated by the processor apparatus 16 into alternative text according to the rules associated with the identified and currently activated specialized edit field. For example, if an email address specialized edit field as described elsewhere herein is identified by the received macro identifier and made active, then the following textual input: "name" SPACE "domain" SPACE "com", will be translated into the following alternative text: "name@domain.com", which alternative text is displayed on the display 32 and thereafter used by the active application (e.g., the email application in the body of an email message). In this case, the rules would indicate that the first SPACE key input gets translated into a "@" character and the second SPACE key input gets translated into a "." Character. At step 155, the predetermined macro delimiter (e.g., a "$") is received, indicating the end of user input employing the identified macro. Then, as step 160, the processor apparatus 16 switches the currently active edit field (i.e., the specialized edit field identified by the macro identifier in step 135) back to a normal edit field.

Thus, as demonstrated herein, the disclosed and claimed concept enables a user to define system level macros for dynamically changing a normal edit field in an application to a specified specialized edit field in order to improve typing efficiency.

In an alternative arrangement, the automatic switch to a particular specialized edit field can be based on the context of the textual information that is being typed. For example, if a user types "http", the handheld electronic device 4 could based thereon automatically determine that that a URL edit field should be employed, and automatically switch to such edit field. Thereafter, the user could simply type "exampleSPACEcom" and the handheld electronic device 4 will translate that into "http://www.example.com". As another example, if the user types "example@", the handheld electronic device 4 could based thereon automatically determine that that an email address edit field should be employed, and automatically switch to such edit field. Thereafter, the user could simply type "SPACEsubdomain1SPACEexampleSPACEcom" and the handheld electronic device 4 will translate that into "example@subdomain1.example.com." As still another example, if the user types "07/", the handheld electronic device 4 could based thereon automatically determine that that a date edit field should be employed, and automatically switch to such edit field. Thereafter, the user could simply type "wrSPACEcc" and the handheld electronic device 4 will translate that into "07/13/99". Thus, according to an alternative arrangement of the disclosed and claimed concept, a method of facilitating the input of text on a handheld electronic device employing normal edit fields and one or more specialized edit fields is provided that includes receiving a first portion of a first textual input and choosing a particular one of the one or more specialized edit fields based on the first portion of the first textual input (i.e., based on context), wherein the particular one of the one or more specialized edit fields has one or more rules associated therewith for translating textual input into alternative text. The method further includes, responsive to choosing the particular specialized edit field, switching a current edit field of a current application of the handheld electronic device to the particular specialized edit field, receiving a second portion of the first textual input, translating the second portion of the first textual input into first alternative text based on the one or more rules, determining that textual input using the particular specialized edit field is complete, by, for example, determining that the user has input a space (e.g., two presses of the SPACE key), and responsive thereto switching the current edit field of the current application from the particular specialized edit field to a normal edit field.

According to a further aspect of the disclosed and claimed concept, following either step 140 in the arrangement of Figure 5 or the step of choosing a particular specialized edit field based on the first portion of the textual input in the context based arrangement just described, a visual indicator is provided to the user of the handheld electronic device 4 which indicates the particular specialized edit field that is current active. For example, Figure 6 shows an email message screen 34 that is provided on the display 32 when a user is composing an email message. In the example shown in Figure 6, the user is composing an email relating to a new web site, and thus the email message includes an URL. The screen 34 includes a edit field indicator 38 in the form of a text box that, in the example, indicates that the current edit field has been switched to a url specialized edit field, either as a result of the use of a macro as described herein or based on context as described herein. The edit field indicator 36 is helpful in that it reminds the user that the edit field type has been switched, and that the user should type accordingly. As will be appreciated, the particular edit field indicator 38 shown in Figure 6 is meant to be illustrative only, and that the edit field indicator 38 may take on a number of other forms without departing from the scope of the disclosed and claimed concept.

While preferred arrangements of the invention have been described and illustrated above, it should be understood that these are exemplary of the invention and are not to be considered as limiting. Additions, deletions, substitutions, and other modifications can be made without departing from the scope of the present invention. Accordingly, the invention is not to be considered as limited by the foregoing description but is only limited by the scope of the appended claims.

## Claims

1. A method of facilitating the input of text on a handheld electronic device (4) employing normal edit fields and one or more specialized edit fields, comprising:
providing a user-defined macro, associated with a first specified edit field and identified by a first macro identifier, said first specified edit field having one or more rules associated therewith for translating textual input into alternative text;
storing the macro in a memory;
receiving a first indication that a macro is to be employed;
receiving said first macro identifier following said receiving a first indication;
responsive to receiving said first macro identifier, switching a current edit field of a current application of said handheld electronic device to said first specified edit field;
receiving first textual input following said switching;
translating said first textual input into first alternative text based on said one or more rules;
receiving a second indication that input using said first macro is complete; and
responsive to receiving said second indication, switching the current edit field of the current application from said first specified edit field to a normal edit field.

2. The method according to claim 1, wherein said receiving a first indication that a macro is to be employed comprises receiving a first predetermined macro delimiter.

3. The method according to claim 2, wherein said receiving a second indication that input using said first macro is complete comprises receiving a second predetermined macro delimiter.

4. The method according to claim 3, wherein said first predetermined macro delimiter and said second predetermined macro delimiter are the same.

5. The method according to claim 4, wherein said first predetermined macro delimiter and said second predetermined macro delimiter each comprises one or more characters.

6. The method according to claim 5, wherein said one or more characters is a $ character

7. The method according to claim 1, further comprising displaying said first alternative text and using said first alternative text in said current application.

8. The method according to claim 1, wherein said first specialized edit field is selected from the group consisting of an email address edit field, a phone number edit field, a date edit field, and a URL edit field.

9. The method according to claim 1, further comprising, following said switching a current edit field of a current application of said handheld electronic device to said first specified edit field, providing a visual indicator (38) identifying said first specified edit field.

10. A handheld electronic device (4), comprising:
an input apparatus (8);
an output apparatus (12); and
a processor apparatus (16) including a processor (36) and a memory (40) having stored therein one or more routines executable by the processor; the one or more routines being adapted to:
store in the memory a provided user-defined macro associated with a first specified edit field and identified by a first macro identifier, said first specified edit field having one or more rules associated therewith for translating textual input into alternative text;
receive a first indication that the macro is to be employed;
receive said first macro identifier following receiving said first indication;
responsive to receiving said first macro identifier, switch a current edit field of a current application of said handheld electronic device to said first specified edit field;
receive first textual input as a result of operation of said input apparatus after the current edit field is switched;
translate said first textual input into first alternative text based on said one or more rules;
receive a second indication that input using said first macro is complete; and
responsive to receiving said second indication, switch the current edit field of the current application from said first specified edit field to a normal edit field.

11. The handheld electronic device according to claim 10, wherein said one or more routines are adapted to receive a first indication that a macro is to be employed by receiving a first predetermined macro delimiter.

12. The handheld electronic device according to claim 11, wherein said one or more routines are adapted to receive a second indication that input using said first macro is complete by receiving a second predetermined macro delimiter.

13. The handheld electronic device according to claim 12, wherein said first predetermined macro delimiter and said second predetermined macro delimiter are the same.

14. The handheld electronic device according to claim 13, wherein said first predetermined macro delimiter and said second predetermined macro delimiter each comprises one or more characters.

15. The handheld electronic device according to claim 14, wherein said one or more characters is a $ character

16. The handheld electronic device according to claim 10, wherein said one or more routines are further adapted to display said first alternative text using said output apparatus and use said first alternative text in said current application.

17. The handheld electronic device according to claim 10, wherein said first specialized edit field is selected from the group consisting of an email address edit field, a phone number edit field, a date edit field, and a URL edit field.

18. The handheld electronic device according to claim 10, said one or more routines being further adapted to provide a visual indicator (38) identifying said first specified edit field after the current edit field of the current application is switched to said first specified edit field.

## Patentansprüche

1. Verfahren zur Erleichterung der Eingabe von Text auf einer handgehaltenen elektronischen Vorrichtung (4), das normale Editierfelder und ein oder mehrere spezialisierte Editierfeld(er) einsetzt, das aufweist:
Vorsehen eines benutzerdefinierten Makros, das zu einem ersten spezifizierten Editierfeld gehört und durch einen ersten Makro-Identifizierer identifiziert wird, wobei das erste spezifizierte Editierfeld eine oder mehrere Regel(n) zugehörig hat zum Umwandeln einer Texteingabe in einen alternativen Text;
Speichern des Makros in einem Speicher;
Empfangen einer ersten Anzeige, dass ein Makro eingesetzt werden soll;
Empfangen des ersten Makro-Identifizierers nachfolgend auf das Empfangen einer ersten Anzeige;
in Reaktion auf ein Empfangen des ersten Makro-Identifizierers,
Umschalten eines aktuellen Editierfelds einer aktuellen Anwendung der handgehaltenen elektronischen Vorrichtung zu dem ersten spezifizierten Editierfeld;
Empfangen einer ersten Texteingabe nachfolgend auf das Umschalten;
Umwandeln der ersten Texteingabe in einen ersten alternativen Text basierend auf der einen oder mehreren Regel(n);
Empfangen einer zweiten Anzeige, dass eine Eingabe unter Verwendung des ersten Makros abgeschlossen ist; und
in Reaktion auf ein Empfangen der zweiten Anzeige, Umschalten des aktuellen Editierfelds der aktuellen Anwendung von dem ersten spezifizierten Editierfeld zu einem normalen Editierfeld.

2. Verfahren gemäß Anspruch 1, wobei das Empfangen einer ersten Anzeige, dass ein Makro eingesetzt werden soll, ein Empfangen eines ersten vorgegebenen Makro-Delimiters aufweist.

3. Verfahren gemäß Anspruch 2, wobei das Empfangen einer zweiten Anzeige, dass eine Eingabe unter Verwendung des ersten Makros abgeschlossen ist, ein Empfangen eines zweiten vorgegebenen Makro-Delimiters aufweist.

4. Verfahren gemäß Anspruch 3, wobei der erste vorgegebene Makro-Delimiter und der zweite vorgegebene Makro-Delimiter die gleichen sind.

5. Verfahren gemäß Anspruch 4, wobei der erste vorgegebene Makro-Delimiter und der zweite vorgegebene Makro-Delimiter jeweils ein oder mehrere Zeichen aufweisen.

6. Verfahren gemäß Anspruch 5, wobei das eine oder die mehreren Zeichen ein $-Zeichen ist/sind.

7. Verfahren gemäß Anspruch 1, das weiter aufweist ein Anzeigen des ersten alternativen Texts und Verwenden des ersten alternativen Texts in der aktuellen Anwendung.

8. Verfahren gemäß Anspruch 1, wobei das erste spezialisierte Editierfeld aus der Gruppe ausgewählt ist, die aus einem Email-Adress-Editierfeld, einem Telefonnummer-Editierfeld, einem Datum-Editierfeld und einem URL-Editierfeld besteht.

9. Verfahren gemäß Anspruch 1, das weiter aufweist, nach dem Umschalten eines aktuellen Editierfelds einer aktuellen Anwendung der handgehaltenen elektronischen Vorrichtung zu dem ersten spezifizierten Editierfeld, Vorsehen eines visuellen Indikators (38), der das erste spezifizierte Editierfeld identifiziert.

10. Handgehaltene elektronische Vorrichtung (4), die aufweist:
eine Eingabevorrichtung (8);
eine Ausgabevorrichtung (12); und
eine Prozessorvorrichtung (16), die einen Prozessor (36) und einen Speicher (40) umfasst, der eine oder mehrere Routine(n) gespeichert hat,
die durch den Prozessor ausführbar sind; wobei die eine oder mehrere Routine(n) ausgebildet ist/sind zum:
Speichern, in dem Speicher, eines vorgesehenen benutzerdefinierten Makros, das zu einem ersten spezifizierten Editierfeld gehört und durch einen ersten Makro-Identifizierer identifiziert wird, wobei das erste spezifizierte Editierfeld eine oder mehrere Regel(n) zugehörig hat zum Umwandeln einer Texteingabe in einen alternativen Text;
Empfangen einer ersten Anzeige, dass das Makro eingesetzt werden soll;
Empfangen des ersten Makro-Identifizierers nachfolgend auf das Empfangen der ersten Anzeige;
in Reaktion auf ein Empfangen des ersten Makro-Identifizierers,
Umschalten eines aktuellen Editierfelds einer aktuellen Anwendung der handgehaltenen elektronischen Vorrichtung zu dem ersten spezifizierten Editierfeld;
Empfangen einer ersten Texteingabe als ein Ergebnis einer Operation der Eingabevorrichtung, nachdem das aktuelle Editierfeld umgeschaltet ist;
Umwandeln der ersten Texteingabe in einen ersten alternativen Text basierend auf der einen oder mehreren Regel(n);
Empfangen einer zweiten Anzeige, dass eine Eingabe unter Verwendung des ersten Makros abgeschlossen ist; und
in Reaktion auf ein Empfangen der zweiten Anzeige, Umschalten des aktuellen Editierfelds der aktuellen Anwendung von dem ersten spezifizierten Editierfeld zu einem normalen Editierfeld.

11. Handgehaltene elektronische Vorrichtung gemäß Anspruch 10, wobei die eine oder mehrere Routine(n) ausgebildet ist/sind zum Empfangen einer ersten Anzeige, dass ein Makro eingesetzt werden soll, durch Empfangen eines ersten vorgegebenen Makro-Delimiters.

12. Handgehaltene elektronische Vorrichtung gemäß Anspruch 11, wobei die eine oder mehrere Routine(n) ausgebildet ist/sind zum Empfangen einer zweiten Anzeige, dass eine Eingabe unter Verwendung des ersten Makros abgeschlossen ist, durch Empfangen eines zweiten vorgegebenen Makro-Delimiters.

13. Handgehaltene elektronische Vorrichtung gemäß Anspruch 12, wobei der erste vorgegebene Makro-Delimiter und der zweite vorgegebene Makro-Delimiter die gleichen sind.

14. Handgehaltene elektronische Vorrichtung gemäß Anspruch 13, wobei der erste vorgegebene Makro-Delimiter und der zweite vorgegebene Makro-Delimiter jeweils ein oder mehrere Zeichen aufweisen.

15. Handgehaltene elektronische Vorrichtung gemäß Anspruch 14, wobei das eine oder die mehreren Zeichen ein $-Zeichen ist/sind.

16. Handgehaltene elektronische Vorrichtung gemäß Anspruch 10, wobei die eine oder mehrere Routine(n) weiter ausgebildet ist/sind zum Anzeigen des ersten alternativen Texts unter Verwendung der Ausgabevorrichtung und Verwenden des ersten alternativen Texts in der aktuellen Anwendung.

17. Handgehaltene elektronische Vorrichtung gemäß Anspruch 10, wobei das erste spezialisierte Editierfeld aus der Gruppe ausgewählt ist, die aus einem Email-Adress-Editierfeld, einem Telefonnummer-Editierfeld, einem Datum-Editierfeld und einem URL-Editierfeld besteht.

18. Handgehaltene elektronische Vorrichtung gemäß Anspruch 10, wobei die eine oder mehrere Routine(n) ausgebildet ist/sind zum Vorsehen eines visuellen Indikators (38), der das erste spezifizierte Editierfeld identifiziert, nachdem das aktuelle Editierfeld der aktuellen Anwendung zu dem ersten spezifizierten Editierfeld umgeschaltet ist.

## Revendications

1. Procédé permettant de faciliter l'entrée d'un texte sur un dispositif électronique portatif (4) employant des champs d'édition normaux et un ou plusieurs champs d'édition spécialisés, comprenant le fait :
de fournir une macro définie par un utilisateur, associée à un premier champ d'édition spécifié et identifiée par un premier identifiant de macro, ledit premier champ d'édition spécifié ayant une ou plusieurs règles qui lui sont associées pour la traduction d'une entrée textuelle dans un texte alternatif ;
de stocker la macro dans une mémoire ;
de recevoir une première indication selon laquelle une macro va être employée ;
de recevoir ledit premier identifiant de macro suivant ladite réception d'une première indication ;
de changer, en réponse à la réception dudit premier identifiant de macro, un champ d'édition actuel d'une application actuelle dudit dispositif électronique portatif audit premier champ d'édition spécifié ;
de recevoir une première entrée textuelle suivant ledit changement ;
de traduire ladite première entrée textuelle en un premier texte alternatif sur la base de ladite une ou plusieurs règles ;
de recevoir une deuxième indication selon laquelle l'entrée utilisant ladite première macro est terminée ; et
de changer, en réponse à la réception de ladite deuxième indication, le champ d'édition actuel de l'application actuelle dudit premier champ d'édition spécifié à un champ d'édition normal.

2. Procédé selon la revendication 1, dans lequel ladite réception d'une première indication selon laquelle une macro va être employée comprend la réception d'un premier délimiteur de macro prédéterminé.

3. Procédé selon la revendication 2, dans lequel ladite réception d'une deuxième indication selon laquelle l'entrée utilisant ladite première macro est terminée comprend la réception d'un deuxième délimiteur de macro prédéterminé.

4. Procédé selon la revendication 3, dans lequel ledit premier délimiteur de macro prédéterminé et ledit deuxième délimiteur de macro prédéterminé sont les mêmes.

5. Procédé selon la revendication 4, dans lequel ledit premier délimiteur de macro prédéterminé et ledit deuxième délimiteur de macro prédéterminé comprennent chacun un ou plusieurs caractères.

6. Procédé selon la revendication 5, dans lequel ledit un caractère ou plus est le caractère $.

7. Procédé selon la revendication 1, comprenant en outre le fait d'afficher ledit premier texte alternatif et d'utiliser ledit premier texte alternatif dans ladite application actuelle.

8. Procédé selon la revendication 1, dans lequel ledit premier champ d'édition spécialisé est sélectionné du groupe constitué d'un champ d'édition d'une adresse de courrier électronique, d'un champ d'édition d'un numéro de téléphone, d'un champ d'édition d'une date et d'un champ d'édition d'une adresse URL.

9. Procédé selon la revendication 1, comprenant en outre, après ledit changement d'un champ d'édition actuel d'une application actuelle dudit dispositif électronique portatif audit premier champ d'édition spécifié, le fait de fournir un indicateur visuel (38) identifiant ledit premier champ d'édition spécifié.

10. Dispositif électronique portatif (4), comprenant :
un appareil d'entrée (8) ;
un appareil de sortie (12) ; et
un appareil de traitement (16) comportant un processeur (36) et une mémoire (40) dans laquelle sont stockés un ou plusieurs sous-programmes exécutables par le processeur ; le ou les plusieurs sous-programmes étant adaptés :
pour stocker dans la mémoire une macro définie par un utilisateur fournie, associée à un premier champ d'édition spécifié et identifiée par un premier identifiant de macro, ledit premier champ d'édition spécifié ayant une ou plusieurs règles qui lui sont associées pour la traduction d'une entrée textuelle en un texte alternatif ;
pour recevoir une première indication selon laquelle la macro va être utilisée ;
pour recevoir ledit premier identifiant de macro après la réception de ladite première indication ;
pour changer, en réponse à la réception dudit premier identifiant de macro, un champ d'édition actuel d'une application actuelle dudit dispositif électronique portatif audit premier champ d'édition spécifié ;
pour recevoir une première entrée textuelle comme un résultat du fonctionnement dudit appareil d'entrée après le changement du champ d'édition actuel ;
pour traduire ladite première entrée textuelle en un premier texte alternatif sur la base desdites une ou plusieurs règles ;
pour recevoir une deuxième indication selon laquelle l'entrée utilisant ladite première macro est terminée ; et
pour changer, en réponse à la réception de ladite deuxième indication, le champ d'édition actuel de l'application actuelle dudit premier champ d'édition spécifié à un champ d'édition normal.

11. Dispositif électronique portatif selon la revendication 10, dans lequel lesdits un ou plusieurs sous-programmes sont adaptés pour recevoir une première indication selon laquelle une macro va être employée en recevant un premier délimiteur de macro prédéterminé.

12. Dispositif électronique portatif selon la revendication 11, dans lequel lesdits un ou plusieurs sous-programmes sont adaptés pour recevoir une deuxième indication selon laquelle l'entrée utilisant ladite première macro est terminée en recevant un deuxième délimiteur de macro prédéterminé.

13. Dispositif électronique portatif selon la revendication 12, dans lequel ledit premier délimiteur de macro prédéterminé et ledit deuxième délimiteur de macro prédéterminé sont les mêmes.

14. Dispositif électronique portatif selon la revendication 13, dans lequel chacun dudit premier délimiteur de macro prédéterminé et dudit deuxième délimiteur de macro prédéterminé comprend un ou plusieurs caractères.

15. Dispositif électronique portatif selon la revendication 14, dans lequel ledit un ou plusieurs caractères est le caractère $.

16. Dispositif électronique portatif selon la revendication 10, dans lequel ledit un ou plusieurs sous-programmes sont en outre adaptés pour afficher ledit premier texte alternatif en utilisant ledit appareil de sortie et pour utiliser ledit premier texte alternatif dans ladite application actuelle.

17. Dispositif électronique portatif selon la revendication 10, dans lequel ledit premier champ d'édition spécialisé est sélectionné du groupe constitué d'un champ d'édition d'une adresse de courrier électronique, d'un champ d'édition d'un numéro de téléphone, d'un champ d'édition d'une date et d'un champ d'édition d'une adresse URL.

18. Dispositif électronique portatif selon la revendication 10, ledit un ou plusieurs sous-programmes étant en outre adaptés pour fournir un indicateur visuel (38) identifiant ledit premier champ d'édition spécifié après le changement du champ d'édition actuel de l'application actuelle audit premier champ d'édition spécifié.
